# EUROPEAN PATENT SPECIFICATION

(11) **EP 4 429 035 B1**
(45) Date of publication and mention of the grant of the patent: **29.07.2026**
(21) Application number: 22889271.7
(22) Date of filing: 01.11.2022
(51) Int. Cl.: H01R 13/40, H01R 13/52, H01R 12/71, B60L 53/16, B60L 53/18, H01R 13/66

(54) **CHARGING SOCKET STRUCTURE WITH EMBEDDED CIRCUIT BOARD, AND CHARGING SOCKET**
LADESOCKELSTRUKTUR MIT EINGEBETTETER LEITERPLATTE UND LADESOCKEL
STRUCTURE DE PRISE DE CHARGE À CARTE DE CIRCUIT IMPRIMÉ INTÉGRÉE, ET PRISE DE CHARGE

(30) Priority: 04.11.2021 CN 202122683238 U
(43) Date of publication of application: 11.09.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Boult Wade Tennant LLP
(86) International application number: PCT/CN2022/129021
(87) International publication number: WO 2023/078247

(56) References cited:
- CN-U- 210 629 971
- CN-U- 211 405 514
- CN-U- 216 085 425
- JP-A- 2013 005 571
- US-A1- 2001 004 201
- US-A1- 2018 331 475
- US-A1- 2020 185 847

## Description

### FIELD OF TECHNOLOGY

The present disclosure relates to the field of charging technologies, and in particular to a charging socket structure with an embedded circuit board and a charging socket including the charging socket structure with an embedded circuit board.

### BACKGROUND

The batteries of new energy vehicles rely on the charging system to replenish power. The charging socket in the charging system includes multiple charging terminals and cables. The charging terminals and cables are connected in the charging socket, with the charging terminals fixed onto the charging socket body and the cables running through a back cover. During the development and assembly of a charging socket of the electric vehicle, because some of various electronic components in the charging socket need to communicate interactively with the vehicle, a rear panel of the charging socket needs to be provided with corresponding openings. In addition, the charging cable may have an excessively large diameter due to too many connected wires, leading to resource waste, difficulties in sealing, and certain safety risk.

Additionally, the terminal in the charging socket needs to be as concentric as possible with a terminal mounting cavity, ensuring that when aligned with a charging gun, the terminal can be accurately inserted into the gun in one attempt without the deviation case. Currently, the terminals in charging sockets are fixed in place, which leads to a problem known as "contagious failure" where the terminals of charging guns from different manufacturers become ineffective. Alternatively, terminals are mounted with large clearances, but this leads to relatively serious wear on the terminals and increases the frequency of replacements. A connector part comprising a circuit board is known from the prior art, for example from US2020/185847A1. A receptacle housing assembly and receptacle are known from the prior art, for example from US2018/331475A1.

Therefore, a new solution is needed urgently to address the foregoing problems in the prior art.

### SUMMARY

The present invention is defined by the independent claims. Further embodiments are set forth in the dependent claims. Any references to inventions or embodiments not falling within the scope of the independent claims are to be interpreted as examples useful for understanding the invention. To conveniently mount electronic components in a charging socket, the present disclosure provides a charging socket structure with an embedded circuit board and a charging socket. The charging socket structure with an embedded circuit board includes a circuit board, and the circuit board is integrated with various types of electronic components. The circuit board, through integration connection, greatly reduces outgoing wires inside a charging structure, reducing a diameter of a charging cable. This facilitates design and development work of the vehicle charging socket, reducing costs.

To resolve the technical problems, the present disclosure uses the following technical solution:

The charging socket structure with an embedded circuit board includes a charging socket front body and a terminal. The charging socket structure with an embedded circuit board further includes a circuit board, the circuit board is provided with a terminal mounting through hole, the terminal runs through the terminal mounting through hole, and the circuit board is provided with an electronic component and a communication interface.

The charging socket includes the foregoing charging socket structure with an embedded circuit board.

The present disclosure has the following beneficial effects:
1. The charging socket structure with an embedded circuit board includes the circuit board, allowing for integration of various types of electronic components on the circuit board. The circuit board, through integration connection, greatly reduces outgoing wires inside a charging structure, reducing a diameter of a charging cable. This facilitates design and development work of the vehicle charging socket and mounting, allowing for automatic assembly and reducing costs.
2. The communication interface is directly connected to the circuit board, avoiding connection of the cables arranged in the charging socket, and the communication interface requires only one opening of a back cover, facilitating sealing of the back cover of the charging socket.
3. The circuit board is provided with the terminal mounting through hole, and the terminal runs through the terminal mounting through hole. This can reduce the mounting space of the circuit board in the charging socket. In addition, an elastic piece on the circuit board can enable the terminal to be aligned automatically and accurately, reducing eccentricity after insertion of the terminal.
4. The circuit board is provided with a metal elastic piece, which is directly connected to the terminal, and the other end is connected to a current sensor of the circuit board, allowing for more direct and accurate measurement of the current of the terminal. This also facilitates disassembly of the terminal, avoiding that mounting the current sensor on the terminal causes difficulties in mounting and disassembly.
5. The circuit board is provided with a temperature sensor, which is in direct or indirect connection with the terminal, allowing for more accurate measurement of real-time temperature of the terminal and facilitating disassembly of the terminal, thus avoiding that mounting the temperature sensor on the terminal causes difficulties in mounting and disassembly.

### BRIEF DESCRIPTION OF THE DRAWINGS

The accompanying drawings of the specification forming a part of this application are provided for a better understanding of the present disclosure. The exemplary embodiments and their descriptions in the present disclosure are intended for explaining the present disclosure.
FIG. 1 is a schematic diagram of a charging socket structure with an embedded circuit board according to the present disclosure.
FIG. 2 is a schematic diagram of a charging socket front body.
FIG. 3 is a schematic diagram of a circuit board.
FIG. 4 is a schematic diagram of a unitary terminal assembly.
FIG. 5 is a schematic structural diagram of an elastic piece.

Numeral references: 1. charging socket front body; 2. circuit board; 3. terminal; 4. terminal bracket;
11. rear panel; 12. terminal protection housing; 13. upper shell; 14. lower shell; 15. charging socket front body interface;
21. mounting through hole; 22. pin connector; and 23. elastic piece.

### DESCRIPTION OF THE EMBODIMENTS

The present disclosure is described in detail below with reference to accompanying drawings and embodiments.

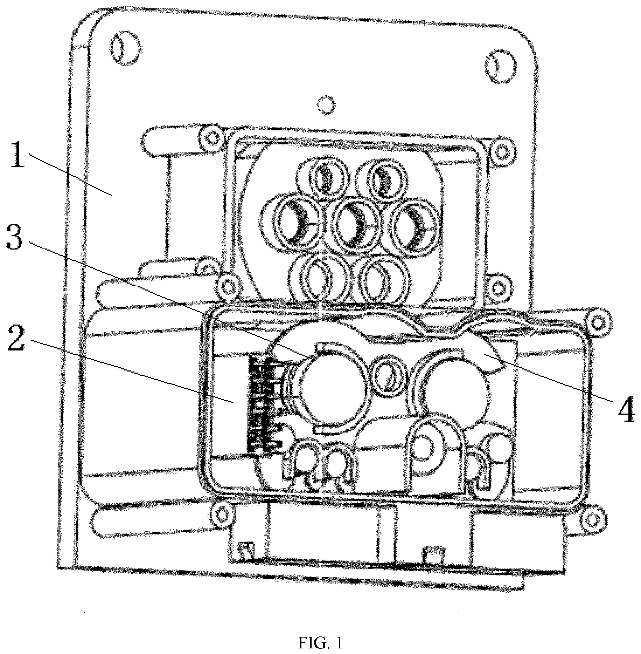

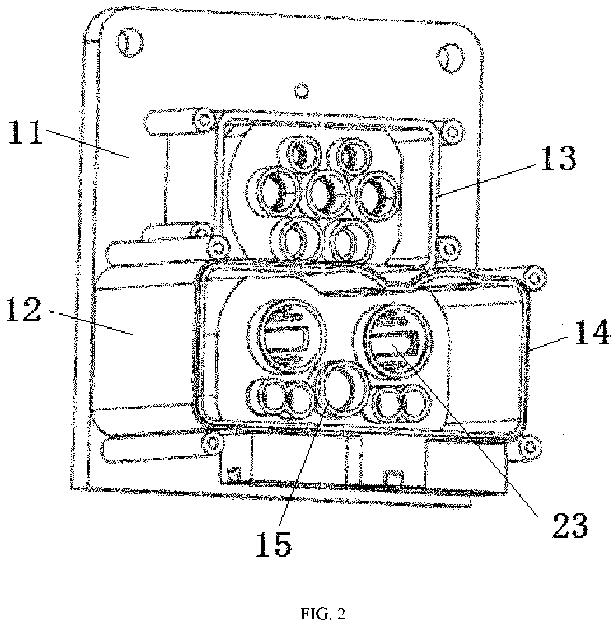

A charging socket structure with an embedded circuit board includes a charging socket front body 1 and a terminal 3. The charging socket structure with an embedded circuit board further includes a circuit board 2, the circuit board 2 is provided with a terminal mounting through hole 21, the terminal 3 runs through the terminal mounting through hole 21, and the circuit board 2 is provided with an electronic component and a communication interface, as shown in FIGs. 1 to 5. This design greatly reduces the number of outgoing wires inside a charging structure, reducing a diameter of a charging cable. This facilitates design and development work of the vehicle charging socket and mounting, allowing for automatic assembly and reducing costs.

In some embodiments that, the electronic component and the communication interface are in parallel relationship, and the electronic component and the communication interface are electrically connected via a circuit wire in a circuit board 2 (for example, a PCB). Those of ordinary skill in the art may choose to install the electronic component based on requirements, to reduce outgoing wires in the charging structure, thus reducing a diameter of a charging cable. The communication interface is directly connected to the circuit board, avoiding connection of the cables arranged in the charging socket, and the communication interface requires only one opening of a back cover, facilitating sealing of the back cover of the charging socket.

The circuit board 2 is provided with the terminal mounting through hole 21, and the terminal 3 runs through the terminal mounting through hole 21. This can reduce the mounting space of the circuit board 2 in the charging socket. In addition, an elastic piece 23 on the circuit board 2 can enable the terminal 3 to be aligned automatically and accurately, reducing eccentricity after insertion of the terminal 3.

In this embodiment, the charging socket front body 1 includes a rear panel 11 and a terminal protection housing 12 arranged in front and rear, the rear panel 11 is provided with a charging socket front body interface 15, the terminal 3 and the charging socket front body interface 15 are connected in one-to-one correspondence, and the circuit board 2 is appropriately disposed in the terminal protection housing 12. The terminal protection housing 12 can protect the terminal 3, and after the terminal 3 is connected to the charging socket front body interface 15, a distance between the terminal 3 and the charging socket front body interface 15 is relatively fixed, facilitating insertion into a rear body of the charging socket.

The size and specification of the charging socket front body interface 15 conform to various standards of Chinese standard AC interface, Chinese standard DC interface, European standard AC interface, European standard DC interface, American standard AC interface, American standard DC interface, Japanese standard AC interface, Japanese standard DC interface, or supercharging interface.

The charging socket front body 1 may have an irregular contour to match different vehicle models. The material of the charging socket front body 1 is insulating soft/hard-plastic material. The charging socket front body 1 may be formed through injection molding process, with the smallest draft angle of 0°.

In this embodiment, the terminal protection housing 12 is tube-shaped, and the circuit board 2 is appropriately disposed in the terminal protection housing 12, that is, the external shape of the circuit board 2 matches the interior of the terminal protection housing 12.

In this embodiment, the electronic component includes a temperature sensor, and the temperature sensor is in direct or indirect contact with the terminal 3. The temperature sensor can measure the temperature of the terminal 3 and transmit it via a data wire. When the temperature of the terminal 3 is abnormal, the working personnel can deal with it in time.

The temperature sensor is an NTC temperature sensor or a PTC temperature sensor. The two types of temperature sensors have advantages of a small volume, such that a gap that cannot be measured by another thermometer can be measured; convenient use, for a resistance can be arbitrarily selected in a range of 0.1 kΩ-100 kΩ; and shapes that are easily processed to be complex, allowing for mass production. And these sensors have good stability and strong overload capacity, and are suitable for products such as adapters that require small size and stable performance.

The circuit board 2 is provided with a temperature sensor, which is in direct or indirect connection with the terminal 3, allowing for more accurate measurement of real-time temperature of the terminal 3 and facilitating disassembly of the terminal 3, thus avoiding that mounting the temperature sensor on the terminal 3 causes difficulties in mounting and disassembly.

The communication interface is located on a surface of the circuit board 2 back away from the rear panel 11, and the communication interface includes one or more of a pin connector 22, a USB interface, an Ethernet interface, and a wireless interface.

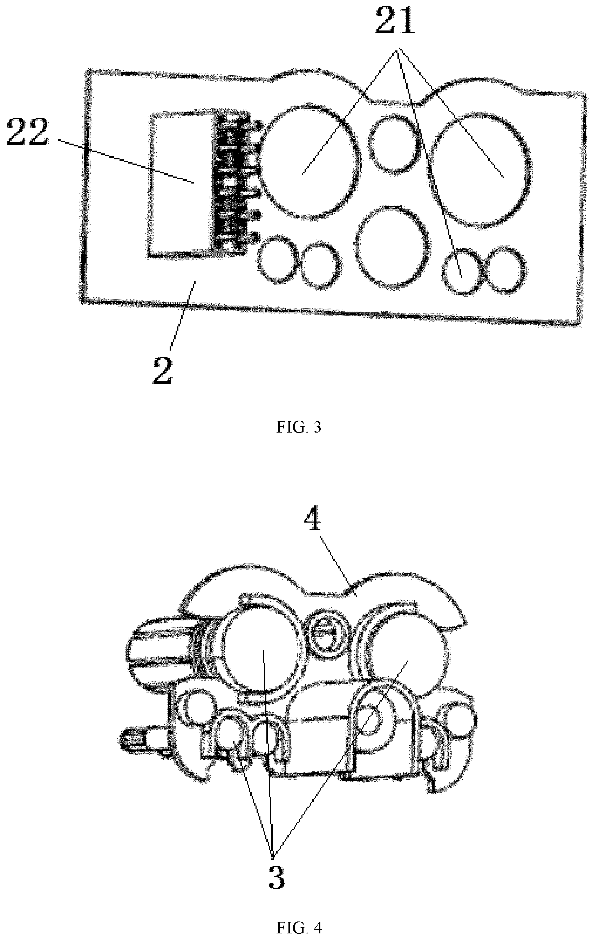

Exemplarily, the communication interface is a pin connector 22, the pin connector 22 may be a single-pin or multi-pin connector, and a male or female contact of the pin connector 22 is disposed on the circuit board 2. The communication interface is located at an edge of the circuit board 2, which is conducive to bundling up the cables on the terminal 3. The communication interface is located on an upper side, a lower side, a left side, or a right side of the circuit board 2, as shown in FIG. 3.

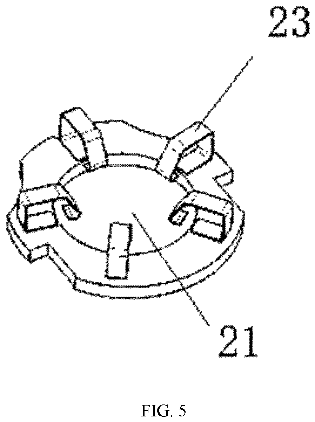

The circuit board 2 is provided with at least one elastic piece 23. As shown in FIG.5, a periphery of the terminal 3 is connected to the elastic piece 23, and a pressure applied by the elastic piece 23 to the terminal 3 is 3 N-200 N

The terminal 3 may be in clearance fit with the terminal mounting through hole 21, and the elastic piece 23 is disposed on an external portion of the mounting through hole 21. The terminal 3 is connected to the elastic piece 23, and the elastic piece 23 is configured to mount and fix the terminal 3. There may be multiple elastic pieces 23, and the elastic pieces 23 are uniformly distributed around the terminal 3. Exemplarily, an even number of elastic pieces 23 are provided symmetrically, such that the terminal 3 bears force uniformly in all directions, so as to be connected to the mounting hole 21 more stably.

Exemplarily, the elastic piece 23 is a metal elastic piece, the metal elastic piece is connected to a circuit in the circuit board 2, and the circuit is connected to required electronic components. Such design has the advantages: the state (for example, information about current and temperature) of the terminal 3 can be monitored in real time using the electronic components and the metal elastic pieces, and the state information of the terminal 3 can be transmitted outward using the circuit board 2 and the charging cables.

To figure out effects of a pressure applied by the elastic piece 23 to the terminal 3 on a contact resistance and unplug-in situation of the inserted terminal 3, the inventor selects terminal mounting through holes 21 and terminals 3 separately with the same size and specification, and different elastic pieces 23 applying pressures to the terminals 3, selects the same terminals 3 for insertion, and tests a contact resistance between an inserted terminal 3 and an elastic piece 23. The test results are shown in Table 1.

The method for testing the contact resistance: A micro-ohmmeter is used with one end of the test end connected to the terminal 3 and the other end connected to the elastic piece 23, with a same placement position for testing each time, and then the contact resistance on the micro-ohmmeter is obtained. In this embodiment, a contact resistance greater than 1 mΩ is considered as unqualified.

**Table 1: Effects of different pressures on contact resistance**

| Pressure applied by elastic piece to terminal (N) | | | | | | | | | | | | | | | |
|---|---|---|---|---|---|---|---|---|---|---|---|---|---|---|---|
| 1 | 3 | 8 | 20 | 40 | 60 | 80 | 10 0 | 12 0 | 14 0 | 16 0 | 18 0 | 200 | 200 | 240 | 260 |

| Contact resistance between elastic piece and terminal (mΩ) | | | | | | | | | | | | | | | |
|---|---|---|---|---|---|---|---|---|---|---|---|---|---|---|---|
| 1.2 2 | 0.9 9 | 0.9 8 | 0.9 1 | 0.8 8 | 0.8 4 | 0.8 2 | 0.7 7 | 0.7 2 | 0.6 8 | 0.6 3 | 0.5 8 | 0.5 1 | 0.49 | 0.49 | 0.49 |

It can be known from Table 1 that when the pressure applied by the elastic piece 23 to the terminal 3 is less than 3 N, the contact resistance between the terminal 3 and the elastic piece 23 is greater than 1 mΩ, which is excessively large. When the pressure applied by the elastic piece 23 to the terminal 3 is greater than 200 N, the resistance cannot be further reduced and unplug-in is more difficult. Therefore, the inventor sets the pressure applied by the elastic piece 23 to the terminal 3 to 3 N-200 N.

In this embodiment, the size and specification of the terminal mounting through hole 21 conform to various standards of Chinese standard AC interface, Chinese standard DC interface, European standard AC interface, European standard DC interface, American standard AC interface, American standard DC interface, Japanese standard AC interface, Japanese standard DC interface, or supercharging interface.

Because the terminals 3 are inserted into the terminal mounting through holes 21 in one-to-one correspondence, the size and specification of the terminal 3 should also conform to various standards of Chinese standard AC interface, Chinese standard DC interface, European standard AC interface, European standard DC interface, American standard AC interface, American standard DC interface, Japanese standard AC interface, Japanese standard DC interface, or supercharging interface.

The electronic component further includes a current sensor, and the current sensor is electrically connected to the metal elastic piece. The current sensor checks the currents at the terminal 3 and the metal elastic piece 23, allowing the working personnel to know whether the circuit transmission is normal. The circuit board is provided with a metal elastic piece, which is directly connected to the terminal, and the other end is connected to a current sensor of the circuit board, allowing for more direct and accurate measurement of the current of the terminal. This also facilitates disassembly of the terminal, avoiding that mounting the current sensor on the terminal causes difficulties in mounting and disassembly.

In this embodiment, the terminal protection housing 12 includes an upper shell 13 and a lower shell 14 arranged up and down. The circuit board 2 may be appropriately arranged in the upper shell 13, the circuit board 2 may be appropriately arranged in the lower shell 14 (as shown in FIG. 1), or the circuit board 2 may be appropriately arranged in the upper shell 13 and the lower shell 14, as shown in FIGs. 1 to 3. The upper shell 13 and the lower shell 14 can separately protect terminals 3 in different types, facilitating mounting and management.

In this embodiment, the charging socket structure with an embedded circuit board and the charging socket further include a terminal bracket 4. The terminal 3 is integrated into a unitary terminal assembly using the terminal bracket 4 (the terminal bracket 4 may be not used alternatively). The circuit board 2 is located between the terminal bracket 4 and the rear panel 11, a spacing is present between an inner surface of the terminal protection housing 12 and the terminal bracket 4, and the communication interface is located within the spacing. As shown in FIG. 4, the electronic component on the circuit board 2 may face the rear panel 11 or the terminal bracket 4. The spacing is present between the inner surface of the terminal protection housing 12 and the terminal bracket 4, and the communication interface is located within the spacing. The communication interface is located on the left side or right side of the circuit board 2, and the circuit board 2 and the communication interface are not sealed and not protected by the terminal bracket 4.

In this embodiment, the circuit board 2 is connected to the rear panel 11 through one or more of adhesive connection, magnetic connection, snap connection, latch connection, bundling connection, threaded connection, rivet connection, and welding connection.

In a first feasible technical solution, contact surfaces of the circuit board 2 and the rear panel 11 are provided with adhesive layers through which the circuit board 2 is adhered to the rear panel 11.

In a second feasible technical solution, the contact surfaces of the circuit board 2 and the rear panel 11 are provided with magnetic components, and the two are connected through the magnetic force between the magnetic components, allowing for convenient and quick connection.

In a third feasible technical solution, of the contact surfaces of the circuit board 2 and the rear panel 11, one is provided with a snap gripper, and the other is provided with a slot. Through the assembly of the snap gripper and the slot, the circuit board 2 is stably connected to the rear panel 11.

In a fourth feasible technical solution, of the contact surfaces of the circuit board 2 and the rear panel 11, one is provided with a latch, and the other is provided with a clasp. Through the assembly of the latch and the clasp, the circuit board 2 is stably connected to the rear panel 11.

In a fifth feasible technical solution, the circuit board 2 and the rear panel 11 are both provided with a groove, and after contact surfaces of the two are connected, a bundling member is used to bundle the circuit board 2 and the rear panel 11 at the position of the grooves. The bundling member includes a bundling tie, a band clamp, a hook lock, or the like.

In a sixth feasible technical solution, the circuit board 2 and the rear panel 11 are respectively provided with a thread and a screw. Through threaded connection between the thread and the screw, the contact surfaces of the circuit board 2 and the rear panel 11 are connected stably.

In a seventh feasible technical solution, the circuit board 2 and the rear panel 11 are both provided with a connection hole, and a rivet is used with an end passing through the connection holes and then deformed, tightening the connection holes, such that the circuit board 2 and the rear panel 11 are connected stably.

In an eighth feasible technical solution, in addition to the contact surfaces, the circuit board 2 and the rear panel 11 further have welding surfaces. A welder is used to melt the welding surfaces for connection, thus allowing the contact surfaces of the circuit board 2 and the rear panel 11 to be connected stably. The welder includes a hot melting welder, an ultrasonic welder, or the like.

In this embodiment, the charging socket structure with an embedded circuit board further includes a charging socket rear body. The charging socket front body 1 is assembled with the charging socket rear body horizontally; the charging socket front body 1 may be detachably connected to the charging socket rear body for mounting.

In this embodiment, the material of the terminal 3 may be copper or copper alloy, which has good electric conducting property and good elastic property. However, as the price of copper continues to rise, the cost of using copper as the material of the terminal 3 becomes increasingly high. The percentage of metal aluminum in the earth crust is about 7.73%, and with optimized refining technology, its price is relatively low. Compared with copper, aluminum is lighter in weight, has the second highest conductivity after copper, and can partially replace copper in the electrical connection field. Aluminum or aluminum alloy, which has good electric conducting property and average elastic property but is less expensive, may be also selected.

When a copper alloy is selected as the material of the terminal 3, it is preferable to include tellurium in the copper to provide terminal 3 with good conductivity and machinability, ensuring electrical performance and improving processability. Additionally, the elasticity of the tellurium copper alloy is also good.

Exemplarily, in the tellurium copper alloy, a percentage of tellurium is 0.1%-5%, further exemplarily, 0.2%-1.2%.

The inventor selects 10 terminals 3 in the same shape for test. Each terminal 3 is made of the tellurium copper alloy; mass percentages of tellurium are respectively 0.05%, 0.1%, 0.2%, 1%, 1.2%, 1.8%, 3%, 5%, 6%, and 7%. The test results are shown in Table 2.

**Table 2: Effects of tellurium copper alloys with different tellurium percentages on conductivity**

| | | | | | | | | | | |
|---|---|---|---|---|---|---|---|---|---|---|
| Tellurium percentage | 0.05% | 0.1% | 0.2% | 1% | 1.2% | 1.8% | 3% | 5% | 6% | 7% |
| Conductivit y | 98.8% | 99.4% | 99.6% | 99.7% | 99.8% | 99.6% | 99.3% | 99.1% | 98.7% | 98.5% |

It can be known from Table 2, when the tellurium percentage is less than 0.1% or greater than 5%, the conductivity significantly decreases and the actual requirement cannot be met. When the mass percentage of tellurium is greater than or equal to 0.2% and less than or equal to 1.2%, the electric conducting property is optimal. Therefore, the inventor selects the tellurium copper alloy with a tellurium percentage of 0.1%-5%. In the most ideal scenario, the tellurium copper alloy with a tellurium percentage of 0.2%-1.2% is selected as the material of the terminal 3.

At least part of the terminal 3 in this embodiment is provided with a coating; the coating can improve the corrosion resistance, improve the electric conducting property, increase the number of insertions, and effectively prolong the service life of the terminal.

The coating may be formed using methods such as electroplating, chemical plating, magnetron sputtering, or vacuum deposition.

The electroplating method is a process where according to the principle of electrolysis, a thin layer of another metal or alloy is applied onto the surface of a metal.

The chemical plating method is a process where under the catalytic action of the metal, metal deposition occurs through controlled oxidation-reduction reaction.

The magnetron sputtering method: Through interaction between a magnetic field and an electric field, electrons are enabled to spiral near a target surface, thereby increasing the probability of electron collision with argon gas to produce ions. The generated ions collide with the target surface under the action of the electric field, thereby sputtering into a target material.

The vacuum deposition method: Under a vacuum condition, various metal and non-metal films are deposited on the surface of parts through evaporation, sputtering, or the like.

The coating is made of one or more of gold, silver, nickel, tin, tin-lead alloy, zinc, silver-antimony alloy, palladium, palladium-nickel alloy, graphite silver, graphene silver, and silver-gold-zirconium alloy. Copper or aluminum, as an active metal, undergo oxidation reaction with oxygen and water during use. Therefore, one or more inert metals are needed as coatings to prolong the service life of the terminal 3. Additionally, for metal contacts that require frequent unplug-in, a good, wear-resistant metal is required as a coating, which can greatly prolong the service life of the contacts. Furthermore, the contacts require good electric conducting property. The electric conducting property and stability of the foregoing metals are superior to those of copper or copper alloys, and aluminum or aluminum alloys, allowing the terminal 3 to achieve better electrical performance and a longer service life.

To figure out effects of different coating materials on overall performance of the terminal 3, the inventor uses sample pieces of the terminals 3, with the same specification, made of the same material but with different coating materials, and performs a test on plug-in and unplug-in times and a test on corrosion resistance time on terminals with the same specification at the plug end. The test results are shown in Table 3.

The plug-in and unplug-in times in Table 3 are obtained as follows: A terminal 3 and a terminal at the plug end are respectively fixed on a test platform, and a mechanical apparatus is used to simulate plug-in and unplug-in of the terminal 3 from the terminal at the plug end. The test is stopped after plug-in and unplug-in every 100 times, to observe the damage situation of the coating on the surface of the terminal 3. If the coating on the surface of the terminal 3 is scratched and the inner material of the terminal 3 is exposed, the test is stopped to record the plug-in and unplug-in times at that moment. In this embodiment, the number of the plug-in and unplug-in times less than 8000 is considered as unqualified.

The test for corrosion resistance time in Table 3: The terminal 3 is placed in a salt mist spray test box, and a salt mist is sprayed onto various positions of the terminal 3, which is then taken out every 20 hours to be cleaned, and observe the corrosion situation on the surface of the terminal 3. This is a cycle. When the corrosion area of the surface of the terminal 3 is greater than 10% of the total area, the test is stopped and the cycle number at that moment is recorded. In this embodiment, the cycle number less than 80 times is considered as unqualified.

**Table 3: Effects of different coating materials on plug-in and unplug-in times and corrosion resistance performance of the terminal**

| Different coating materials | | | | | | | | | | | |
|---|---|---|---|---|---|---|---|---|---|---|---|
| Gold | Silver | Nick el | Tin | Tin-lead alloy | Zinc | Silver-antimo ny alloy | Palladi um | Palladi um-nickel alloy | Graph ite silver | Graph ene silver | Silver -gold-zircon ium alloy |

| Plug-in and unplug-in times (times) | | | | | | | | | | | |
|---|---|---|---|---|---|---|---|---|---|---|---|
| 12500 | 11800 | 9500 | 9300 | 9800 | 9500 | 12200 | 12100 | 12200 | 12500 | 12000 | 10000 |

| Corrosion resistance test cycle (times) | | | | | | | | | | | |
|---|---|---|---|---|---|---|---|---|---|---|---|
| 135 | 120 | 92 | 86 | 89 | 95 | 126 | 118 | 121 | 125 | 130 | 133 |

It can be seen from Table 3 that when the coatings are made of gold, silver, silver-antimony alloy, palladium, palladium-nickel alloy, graphite silver, graphene silver, and silver-gold-zirconium alloy, most of the values in the rest results exceed the standard values, showing stable performance. When the coatings are made of nickel, tin, tin-lead alloy, and zinc, the test results also meet the requirements. Therefore, the inventor selects one or more of the following as the material of the coating: gold, silver, nickel, tin, tin-lead alloy, zinc, silver-antimony alloy, palladium, palladium-nickel alloy, graphite silver, graphene silver, and silver-gold-zirconium alloy.

The present disclosure further discloses a charging socket including the charging socket structure with an embedded circuit board.

The following describes the processing and molding of the charging socket front body 1 and the charging socket rear body:

The charging socket front body 1 and the charging socket rear body are both molded through plastic injection. The equipment precision and the mold error are controlled to meet the dimensional requirements. The injection molding process is controlled based on clamping force, injection position measurement accuracy, injection speed, injection pressure, mold temperature, and the like, thus meeting the dimensional accuracy requirements for pre-assembly and rotation, as well as the operational requirement for rotational force.

The specific parameters are as follows:
0.03 mm is taken when the clamping force is zero; and 0.005 mm is taken when the clamping force is maximum;
the injection position accuracy (end of packing) is less than 0.03 mm;
the injection speed is greater than or equal to 300 mm/s;
the injection pressure is greater than 25 MPa; and
the temperature variation of the mold is controlled within ±1°C.

The following describes the comparison of technical effects between the charging socket structure with an embedded circuit board of the present disclosure and the conventional charging socket. See Table 4.

**Table 4: A comparison of technical effects between the charging socket structure with an embedded circuit board of the present disclosure and the conventional charging socket**

| | Prior art | The present disclosure |
|---|---|---|
| The number of outgoing wires of a circuit board | At least two outgoing wires | Only one outgoing wire |
| Waterproof and sealing performance | Multiple sealed parts with a poor effect | Only one part sealed, reducing probability of failure, exerting significant effect |
| Safety and convenience | Too many outgoing wires result in inconvenient mounting | Automatic assembly process can be achieved, facilitating mounting |

For the sake of understanding and description, absolute positional relationships are used in the present disclosure. Unless otherwise specified, in FIG. 1, the directional term "up" refers to the upper direction, "down" refers to the lower direction, and "left" refers to the left direction, "right" refers to the right direction, "front" refers to a direction perpendicular to a paper surface in FIG. 1 and pointing an inner side of the paper surface, and "back" refers to a direction perpendicular to a paper surface in FIG. 1 and pointing an outer side of the paper surface. The present disclosure is described from the observer's perspective, but the directional terms mentioned above should not be construed or interpreted as limitations to the scope of protection of the present disclosure.

## Claims

1. A charging socket structure with an embedded circuit board, comprising a charging socket front body (1) and a terminal (3), wherein the charging socket structure with an embedded circuit board further comprises a circuit board (2), the circuit board (2) is provided with a terminal mounting through hole (21), the terminal (3) runs through the terminal mounting through hole (21), and the circuit board (2) is provided with an electronic component and a communication interface, the circuit board (2) is provided with at least one metal elastic piece (23), a periphery of the terminal (3) is connected to the metal elastic piece (23), **characterized in that** the electronic component further comprises a current sensor, one end of the metal elastic piece (23) is electrically connected to the terminal (3), and the other end of the metal elastic piece (23) is electrically connected to the current sensor of the circuit board, so that the current sensor is capable of measuring the current of the terminal (3).

2. The charging socket structure with an embedded circuit board according to claim 1, wherein the charging socket front body (1) comprises a rear panel (11) and a terminal protection housing (12) arranged in front and rear, the rear panel (11) is provided with a charging socket front body interface (15), the terminal (3) and the charging socket front body interface (15) are connected in one-to-one correspondence, and the circuit board (2) is appropriately disposed in the terminal protection housing (12).

3. The charging socket structure with an embedded circuit board according to claim 1, wherein the electronic component comprises a temperature sensor, and the temperature sensor is in direct or indirect contact with the terminal (3).

4. The charging socket structure with an embedded circuit board according to claim 2, wherein the communication interface is located on a surface of the circuit board (2) back away from the rear panel (11), and the communication interface comprises one or more of a pin connector (22), a USB interface, an Ethernet interface, and a wireless interface.

5. The charging socket structure with an embedded circuit board according to claim 1, wherein a pressure applied by the elastic piece (23) to the terminal (3) is 3 N-200 N.

6. The charging socket structure with an embedded circuit board according to claim 5, wherein the metal elastic piece is connected to a circuit in the circuit board (2).

7. The charging socket structure with an embedded circuit board according to claim 2, wherein the terminal protection housing (12) comprises an upper shell (13) and a lower shell (14) arranged up and down, the circuit board (2) is located in the upper shell (13), the circuit board (2) is located in the lower shell (14), or the circuit board (2) is located in the upper shell (13) and the lower shell (14).

8. The charging socket structure with an embedded circuit board according to claim 2, further comprising a terminal bracket (4), wherein the terminal (3) is integrated into a unitary terminal assembly using the terminal bracket (4), the circuit board (2) is located between the terminal bracket (4) and the rear panel (11), a spacing is present between an inner surface of the terminal protection housing (12) and the terminal bracket (4), and the communication interface is located within the spacing.

9. The charging socket structure with an embedded circuit board according to claim 2, wherein the circuit board (2) is connected to the rear panel (11) through one or more of adhesive connection, magnetic connection, snap connection, insertion connection, latch connection, bundling connection, threaded connection, rivet connection, and welding connection.

10. A charging socket, comprising the charging socket structure with an embedded circuit board according to any one of claims 1 to 9.

## Patentansprüche

1. Ladebuchsenstruktur mit einer eingebetteten Leiterplatte, die einen Ladebuchsenfrontkörper (1) und einen Anschluss (3) umfasst, wobei die Ladebuchsenstruktur mit einer eingebetteten Leiterplatte ferner eine Leiterplatte (2) umfasst, die Leiterplatte (2) mit einer Anschlussbefestigungsbohrung (21) versehen ist, der Anschluss (3) durch die Anschlussbefestigungsbohrung (21) verläuft und die Leiterplatte (2) mit einem elektronischen Bauteil und einer Kommunikationsschnittstelle versehen ist,
die Leiterplatte (2) mit mindestens einem metallischen elastischen Element (23) versehen ist, ein Umfang des Anschlusses (3) mit dem metallischen elastischen Element (23) verbunden ist, **dadurch gekennzeichnet, dass** das elektronische Bauteil ferner einen Stromsensor umfasst, ein Ende des metallischen elastischen Elements (23) elektrisch mit dem Anschluss (3) verbunden ist und das andere Ende des metallischen elastischen Elements (23) elektrisch mit dem Stromsensor der Leiterplatte verbunden ist, sodass der Stromsensor den Strom des Anschlusses (3) messen kann.

2. Ladebuchsenstruktur mit einer eingebetteten Leiterplatte nach Anspruch 1, wobei der Ladebuchsenfrontkörper (1) eine Rückwand (11) und ein davor und dahinter angeordnetes Anschlussschutzgehäuse (12) umfasst, die Rückwand (11) mit einer Ladebuchsenfrontkörperschnittstelle (15) versehen ist, der Anschluss (3) und die Ladebuchsenfrontkörperschnittstelle (15) Eins-zu-Eins verbunden sind und die Leiterplatte (2) geeignet im Anschlussschutzgehäuse (12) angeordnet ist.

3. Ladebuchsenstruktur mit einer eingebetteten Leiterplatte nach Anspruch 1, wobei das elektronische Bauteil einen Temperatursensor umfasst und der Temperatursensor in direktem oder indirektem Kontakt mit dem Anschluss (3) steht.

4. Ladebuchsenstruktur mit einer eingebetteten Leiterplatte nach Anspruch 2, wobei sich die Kommunikationsschnittstelle auf einer von der Rückwand (11) abgewandten Oberfläche der Leiterplatte (2) befindet und die Kommunikationsschnittstelle eines oder mehrere von einem Stiftstecker (22), einer USB-Schnittstelle, einer Ethernet-Schnittstelle und einer drahtlosen Schnittstelle umfasst.

5. Ladebuchsenstruktur mit einer eingebetteten Leiterplatte nach Anspruch 1, wobei ein Druck, der von dem elastischen Element (23) auf den Anschluss (3) ausgeübt wird, 3 N-200 N beträgt.

6. Ladebuchsenstruktur mit einer eingebetteten Leiterplatte nach Anspruch 5, wobei das metallische elastische Element mit einem Schaltkreis in der Leiterplatte (2) verbunden ist.

7. Ladebuchsenstruktur mit einer eingebetteten Leiterplatte nach Anspruch 2, wobei das Anschlussschutzgehäuse (12) eine obere Hülle (13) und eine untere Hülle (14) umfasst, die oben und unten angeordnet sind, die Leiterplatte (2) sich in der oberen Hülle (13) befindet, die Leiterplatte (2) sich in der unteren Hülle (14) befindet oder die Leiterplatte (2) sich sowohl in der oberen Hülle (13) als auch in der unteren Hülle (14) befindet.

8. Ladebuchsenstruktur mit einer eingebetteten Leiterplatte nach Anspruch 2, ferner umfassend eine Anschlussklemme (4), wobei der Anschluss (3) unter Verwendung der Anschlussklemme (4) in eine einheitliche Anschlussbaugruppe integriert ist, die Leiterplatte (2) sich zwischen der Anschlussklemme (4) und der Rückwand (11) befindet, ein Abstand zwischen einer Innenfläche des Anschlussschutzgehäuses (12) und der Anschlussklemme (4) vorhanden ist und die Kommunikationsschnittstelle sich innerhalb dieses Abstands befindet.

9. Ladebuchsenstruktur mit einer eingebetteten Leiterplatte nach Anspruch 2, wobei die Leiterplatte (2) mit der Rückwand (11) durch eine oder mehrere einer Klebeverbindung, Magnetverbindung, Schnappverbindung, Steckverbindung, Verriegelungsverbindung, Bündelverbindung, Gewindeverbindung, Nietverbindung und Schweißverbindung verbunden ist.

10. Ladebuchse, umfassend die Ladebuchsenstruktur mit einer eingebetteten Leiterplatte nach einem der Ansprüche 1 bis 9.

## Revendications

1. Structure de prise de charge avec une carte de circuit intégrée, comprenant un corps avant de prise de charge (1) et une borne (3), dans laquelle la structure de prise de charge avec une carte de circuit intégrée comprend en outre une carte de circuit (2), la carte de circuit (2) est pourvue d'un trou traversant de montage de borne (21), la borne (3) traverse le trou traversant de montage de borne (21), et la carte de circuit (2) est pourvue d'un composant électronique et d'une interface de communication,
la carte de circuit (2) est pourvue d'au moins une pièce élastique métallique (23), une périphérie de la borne (3) est connectée à la pièce élastique métallique (23), **caractérisée en ce que** le composant électronique comprend en outre un capteur de courant, une extrémité de la pièce élastique métallique (23) est connectée électriquement à la borne (3), et l'autre extrémité de la pièce élastique métallique (23) est connectée électriquement au capteur de courant de la carte de circuit, de sorte que le capteur de courant est capable de mesurer le courant de la borne (3).

2. Structure de prise de charge avec une carte de circuit intégrée selon la revendication 1, dans laquelle le corps avant de prise de charge (1) comprend un panneau arrière (11) et un boîtier de protection de borne (12) agencés à l'avant et à l'arrière, le panneau arrière (11) est pourvu d'une interface de corps avant de prise de charge (15), la borne (3) et l'interface de corps avant de prise de charge (15) sont connectées en correspondance un à un, et la carte de circuit (2) est disposée de manière appropriée dans le boîtier de protection de borne (12).

3. Structure de prise de charge avec une carte de circuit intégrée selon la revendication 1, dans laquelle le composant électronique comprend un capteur de température, et le capteur de température est en contact direct ou indirect avec la borne (3).

4. Structure de prise de charge avec une carte de circuit intégrée selon la revendication 2, dans laquelle l'interface de communication est située sur une surface de la carte de circuit (2) en arrière à l'écart du panneau arrière (11), et l'interface de communication comprend un ou plusieurs parmi un connecteur à broche (22), une interface USB, une interface Ethernet et une interface sans fil.

5. Structure de prise de charge avec une carte de circuit intégrée selon la revendication 1, dans laquelle une pression appliquée par la pièce élastique (23) à la borne (3) est de 3 N-200 N.

6. Structure de prise de charge avec une carte de circuit intégrée selon la revendication 5, dans laquelle la pièce métallique élastique est connectée à un circuit dans la carte de circuit (2).

7. Structure de prise de charge avec une carte de circuit intégrée selon la revendication 2, dans laquelle le boîtier de protection de borne (12) comprend une coque supérieure (13) et une coque inférieure (14) agencées de haut en bas, la carte de circuit (2) est située dans la coque supérieure (13), la carte de circuit (2) est située dans la coque inférieure (14), ou la carte de circuit (2) est située dans la coque supérieure (13) et la coque inférieure (14).

8. Structure de prise de charge avec une carte de circuit intégrée selon la revendication 2, comprenant en outre un support de borne (4), dans laquelle la borne (3) est intégrée dans un ensemble de borne unitaire en utilisant le support de borne (4), la carte de circuit (2) est située entre le support de borne (4) et le panneau arrière (11), un espacement est présent entre une surface intérieure du boîtier de protection de borne (12) et le support de borne (4), et l'interface de communication est située au sein de l'espacement.

9. Structure de prise de charge avec une carte de circuit intégrée selon la revendication 2, dans laquelle la carte de circuit (2) est connectée au panneau arrière (11) par l'intermédiaire d'une ou plusieurs parmi une connexion adhésive, connexion magnétique, connexion à enclenchement, connexion par insertion, connexion à verrouillage, connexion par regroupement, connexion filetée, connexion par rivet et connexion soudée.

10. Prise de charge, comprenant la structure de prise de charge avec une carte de circuit intégrée selon l'une quelconque des revendications 1 à 9.
